# EUROPÄISCHE PATENTANMELDUNG

(11) **EP 4 663 671 A1**
(43) Veröffentlichungstag der Anmeldung: **17.12.2025**
(21) Anmeldenummer: 24182267.5
(22) Anmeldetag: 14.06.2024
(51) Int. Cl.: C08G 18/02, C08G 18/18, C08G 18/73, C08G 18/75, C08G 18/79

(54) **VERFAHREN ZUR ISOCYANATMODIFIZIERUNG UNTER VERWENDUNG EINES SPIROZYKLISCHEN AMMONIUMSALZES ALS KATALYSATOR**

(71) Anmelder: Covestro Deutschland AG, 51373 Leverkusen (DE)
(72) Erfinder: Richter, Frank, 51373 Leverkusen (DE); Kostromine, Serguei, 53913 Swisttal-Buschhoven (DE)
(74) Vertreter: Levpat

(57) **Zusammenfassung**

Die Erfindung betrifft ein Verfahren zur Herstellung eines modifizierten Isocyanats umfassend der Umsetzung eines monomeren Isocyanats in Gegenwart eines Katalysator unter Bildung einer Reaktionsmischung, wobei der Katalysator mindestens ein spirozyklisches Ammoniumsalz enthaltend mindestens ein spirozyklisches Ammoniumkation und mindestens ein Anion umfasst. Die Erfindung umfasst weiterhin ein modifiziertes Isocyanat erhältlich nach dem erfindungsgemäßen Verfahren und dessen Verwendung zur Herstellung von Polyurethankörpern oder Beschichtungen sowie die Polyurethankörper oder Beschichtungen. Weiterhin betrifft die Erfindung Ein- oder Zwei-Komponenten-Systeme umfassend die Polyisocyanate mit verbesserten Eigenschaften.

## Beschreibung

Die Erfindung betrifft ein Verfahren zur Herstellung eines modifizierten Isocyanats umfassend die Umsetzung eines monomeren Isocyanats in Gegenwart eines Katalysator unter Bildung einer Reaktionsmischung, wobei der Katalysator mindestens ein spirozyklisches Ammoniumsalz enthaltend mindestens ein spirozyklisches Ammoniumkation und mindestens ein Anion umfasst. Die Erfindung umfasst weiterhin ein modifiziertes Isocyanat erhältlich nach dem erfindungsgemäßen Verfahren und dessen Verwendung zur Herstellung von Polyurethankörpern oder Beschichtungen sowie die Polyurethankörper oder Beschichtungen. Weiterhin betrifft die Erfindung Ein- oder Zwei-Komponenten-Systeme umfassend die Polyisocyanate mit verbesserten Eigenschaften.

Die Oligo- bzw. Polymerisierung von Isocyanaten insbesondere unter Bildung von höhermolekularen Oligomerengemischen mit Uretdion- ("Dimer"), Isocyanurat- ("Trimer") und/oder Iminooxadiazindionstrukturen ("asymmetrisches Trimer") im Molekülgerüst ist seit langem bekannt. Wie vorstehend erkennbar, liegen der Oligo- bzw. Polymerisierung von Isocyanaten prinzipiell die gleichen chemischen Reaktionen zugrunde. Die Umsetzung einer kleineren Anzahl von Isocyanaten miteinander bezeichnet man als Oligomerisierung. Die Umsetzung einer größeren Anzahl von Isocyanaten bezeichnet man als Polymerisierung. Im Rahmen der vorliegenden Erfindung wird die vorstehend beschriebene Oligomerisierung bzw. Polymerisierung von Isocyanaten zusammenfassend als Isocyanatmodifizierung oder Modifizierung von Isocyanaten bezeichnet.

Enthalten die modifizierten Polyisocyanate freie NCO-Gruppen, die ggf. auch mit Blockierungsmitteln vorübergehend desaktiviert worden sein können, sind sie außerordentlich hochwertige Ausgangsstoffe für die Herstellung einer Vielzahl von Polyurethan-Kunststoffen und Beschichtungsmitteln.

Es haben sich eine Reihe technischer Verfahren zur Isocyanatmodifizierung etabliert, wobei man in der Regel das zu modifizierende Isocyanat, meist ein Diisocyanat, durch Zusatz von Katalysatoren umsetzt und diese anschließend, wenn der gewünschte Umsatzgrad des zu modifizierenden Isocyanates erreicht ist, durch geeignete Maßnahmen unwirksam macht (deaktiviert) und das erhaltene Polyisocyanat in der Regel vom nicht umgesetzten Monomer abtrennt. Eine Zusammenstellung dieser Verfahren des Standes der Technik findet sich in H. J. Laas et al., J. Prakt. Chem. 1994, 336, 185 ff. Als Modifizierungskatalysatoren haben sich ionisch aufgebaute Verbindungen bewährt, da sie in sehr geringer Menge, relativ zum umzusetzenden Monomer, eingesetzt werden können und äußerst schnell zum gewünschten Ergebnis führen, wobei die Kationen insbes. unter dem Aspekt der Löslichkeit des jeweiligen Salzes im Isocyanatmilieu von Bedeutung sind.

WO 2015/124504 A1 und WO 2017/029266 A1 beschreiben sehr stabile Ammoniumsalze, bei denen das ladungstragende Stickstoffatom Teil eines Ringsystems ist. Diese Verbindungen weisen allerdings den Nachteil auf, im isocyanatfunktionellen Polyisocyanatharz schlecht löslich zu sein und daher Trübungen in den finalen Verfahrensprodukten verursachen zu können.

Der Erfindung lag die Aufgabe zugrunde, ein verbessertes Verfahren zur Isocyanatmodifizierung zur Verfügung zu stellen, bei dem kommerziell gut zugängliche oder aus preiswerten Edukten leicht herstellbare Verbindungen als Katalysatoren eingesetzt werden, die eine hohe katalytische Aktivität und Selektivität bei gleichzeitig guter Katalysatorstabilität aufweisen und eine geringe Trübungsneigung der Verfahrensprodukte aufweisen. Insbesondere bestand die Aufgabe, spirozyklische Ammoniumsalze als Katalysatoren für die Herstellung von modifizierten Isocyanaten mit einer verbesserten Löslichkeit in aprotischen Medien wie beispielsweise monomeren Isocyanaten wie HDI und IPDI und ihren Oligomeren ("Polyisocyanaten") im Vergleich zu den Spiroverbindungen des Standes der Technik zur Verfügung zu stellen.

Erfindungsgemäß wurde die Aufgabe gelöst durch ein Verfahren zur Herstellung eines modifizierten Isocyanats umfassend
a. der Umsetzung eines monomeren Isocyanats in Gegenwart eines Katalysator unter Bildung einer Reaktionsmischung (a),
   wobei der Katalysator mindestens ein spirozyklisches Ammoniumsalz enthaltend mindestens ein spirozyklisches Ammoniumkation und mindestens ein Anion umfasst,
   wobei das spirozyklische Ammoniumkation mindestens ein Ladungs-tragendes Sickstoffatom beinhaltet, welches Teil von zwei voneinander verschiedenen Ringsystemen (I) und (II) ist,
   wobei die voneinander verschiedenen Ringsysteme (I) und (II) jeweils aus C2-C20 Alkylenketten bestehen,
   wobei die jeweiligen Alkylenketten optional mit Heteroatomen wie Sauerstoff, Stickstoff oder Schwefel in der Alkylenkette unterbrochen sein können,
   wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene exozyklische Substituenten enthält,
   wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist.

Exozyklische Substituenten sind erfindungsgemäß Substituenten in der Seitenkette bzw. den Seitenketten der Ringsysteme (I) und/oder (II).

Bevorzugt bedeuten die Bezugnahmen auf "umfassend", "enthaltend" usw. "im Wesentlichen bestehend aus" und ganz besonders bevorzugt "bestehend aus". Die in den Patentansprüchen und in der Beschreibung genannten weiteren Ausführungsformen können beliebig, insbesondere auch unter den verschiedenen erfindungsgemäßen Gegenständen, kombiniert werden, sofern sich aus dem Kontext nicht eindeutig das Gegenteil ergibt.

"Mindestens ein", wie hierin verwendet, bezieht sich auf 1 oder mehr, beispielsweise 2, 3, 4, 5, 6, 7, 8, 9 oder mehr. Im Zusammenhang mit Bestandteilen der hierin beschriebenen Verbindungen bezieht sich diese Angabe nicht auf die absolute Menge an Molekülen, sondern auf die Art des Bestandteils. "Mindestens ein zyklisches Ammoniumsalz" bedeutet daher beispielsweise, dass nur eine Art von zyklischem Ammoniumsalz oder mehrere verschiedene Arten von zyklischen Ammoniumsalzen, ohne Angaben über die Menge der einzelnen Verbindungen zu machen, enthalten sein können.

Zahlenwerte, die hierin ohne Dezimalstellen angegeben sind, beziehen sich jeweils auf den vollen angegebenen Wert mit einer Dezimalstelle. So steht beispielsweise "99 %" für "99,0 %".

Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

In einer Ausführung der Erfindung enthält das spirozyklische Ammoniumsalz genau ein spirozyklisches Ammoniumkation und genau ein Anion.

In einer Ausführung der Erfindung enthalten die jeweiligen Alkylenketten nur Kohlenstoff und Wasserstoff, d.h. die jeweiligen Alkylenketten sind nicht mit Heteroatomen wie Sauerstoff, Stickstoff oder Schwefel, speziell Sauerstoff in der Alkylenkette unterbrochen.

In einer Ausführung der Erfindung ist der mindestens eine von H verschiedene Substituent eine verzweigte oder unverzweigte Alkylgruppe, eine verzweigte oder unverzweigte Cycloalkylgruppe und/oder eine substituierte oder unsubstituierte Arylgruppe, bevorzugt eine verzweigte oder unverzweigte Alkylgruppe.

In einer Ausführung der Erfindung ist der mindestens eine von H verschiedene Substituent eine verzweigte oder unverzweigte Alkylgruppe, wobei in einer bevorzugten Ausführungsform die verzweigte oder unverzweigte Alkylgruppe 1 bis 20 C-Atome, bevorzugt 1 bis 10 C-Atome enthält.

In einer alternativen Ausführung der Erfindung sind die jeweiligen Alkylenketten mit Heteroatomen wie Sauerstoff, Stickstoff oder Schwefel, bevorzugt Sauerstoff in der Alkylenkette unterbrochen, wobei erfindungsgemäß unter "unterbrochen" beispielsweise der Austausch einer CH₂-Gruppe der Alkylenkette durch Sauerstoff zu verstehen ist, wobei formal eine Ethereinheit resultiert.

In einer Ausführung der Erfindung ist das Ringsystem (I) aus 3 bis 5 Atomen, bevorzugt 4 bis 5 Atomen und besonders bevorzugt aus 5 Atomen aufgebaut, wobei das spirozyklische Ammoniumkation jeweils mitgezählt wird.

In einer bevorzugten Ausführung der Erfindung ist das Ringsystem (I) aus 3 bis 5 Atomen, bevorzugt 4 bis 5 Atomen und besonders bevorzugt aus 5 Atomen aufgebaut und enthält keine von H verschiedenen, exozyklischen Substituenten.

In einer Ausführung der Erfindung ist das Ringsystem (II) aus 6 bis 8 Atomen, bevorzugt 6 bis 7 Atomen und besonders bevorzugt aus 6 Atomen aufgebaut, wobei das spirozyklische Ammoniumkation jeweils mitgezählt wird.

In einer bevorzugten Ausführung der Erfindung enthält das Ringsystem (II) den mindestens einen, bevorzugt die mindestens zwei, besonders bevorzugt die zwei bis vier und ganz besonders bevorzugt die zwei oder drei von H verschiedenen, exozyklischen Substituenten, wobei die mindestens zwei, bevorzugt die zwei bis vier und besonders bevorzugt die zwei oder drei von H verschiedenen Substituenten in einer Seitenkette zu einer weiteren Erhöhung der Löslichkeit der spirozyklischen Ammoniumsalze führen.

In einer besonders bevorzugten Ausführung der Erfindung ist das Ringsystem (II) aus 6 bis 8 Atomen, bevorzugt 6 bis 7 Atomen und besonders bevorzugt aus 6 Atomen aufgebaut und zwei bis vier, bevorzugt zwei oder drei von H verschiedenen, exozyklischen Substituenten mit jeweils einer verzweigten oder einer unverzweigten, bevorzugt einer unverzweigten Alkylgruppe, wobei die verzweigte oder unverzweigte Alkylgruppe jeweils 1 bis 10, bevorzugt 2 bis 6 C-Atome enthält. Hierbei ist in einer Ausführungsform die berechnete Molmasse einer verzweigten oder einer unverzweigten, bevorzugt einer unverzweigten Alkylgruppe größer, als die der mindestens einen weiteren verzweigten oder einer unverzweigten, bevorzugt einer unverzweigten weiteren Alkylgruppe. Hierbei berechnet sich die Molmasse einer Alkylgruppe aus der Summe der Molmassen der Kohlenstoff- und Wasserstoff in der jeweiligen Alkylgruppe, wobei beispielsweise für eine Methylgruppe eine Molmasse von 15 g/mol und für eine Ethylgruppe eine Molmasse von 29 g/mol resultiert.

Als Anionen können bei dem erfindungsgemäßen, spirozyklischen Ammoniumsalz prinzipiell alle Strukturtypen zum Einsatz kommen, die als katalytisch aktiv gegenüber Isocyanaten bekannt sind, bevorzugt sind das Hydroxid, Alkanoat, Carboxylat, Heterocyclen mit mindestens einem negativ geladenen Stickstoffatom im Ring, insbesondere Azolat, Imidazolat, Triazolat, Tetrazolat, Fluorid, Hydrogendifluorid, höhere Polyfluoride oder Mischungen von diesen (Addukte von mehr als einem Äquivalent HF an Fluorid-Ionen enthaltende Verbindungen), wobei die Fluoride, Hydrogendifluoride, Dihydrogentrifluoride und höheren Polyfluoride erfindungsgemäß zu Produkten mit hohem Iminooxadiazindiongruppengehalt führen.

Die erfindungsgemäß einzusetzenden, spirozyklischen Ammoniumsalze können einzelnen oder in beliebigen Mischungen untereinander verwendet werden. So liegen die Lösungen quaternärer Ammoniumhydroxide in verschiedenen Alkoholen je nach pKs-Wert der Base und des verwendeten Alkohols teilweise oder vollständig als Ammoniumsalze mit Alkoholat-Anion vor. Dieses Gleichgewicht kann durch Entfernung des aus dieser Reaktion resultierenden Reaktionswassers ganz auf die Seite vollständiger Alkoholatbildung verschoben werden.

In einer Ausführungsform der Erfindung wird das Anion ausgewählt aus der Gruppe bestehend aus Hydroxid, Alkanoat, Carboxylat, Heterocyclen mit mindestens einem negativ geladenen Stickstoffatom im Ring, Fluorid, Hydrogendifluorid, höhere Polyfluoride (das sind Addukte von mehr als einem Äquivalent HF an Fluorid-Ionen enthaltende Verbindungen) und beliebige Mischungen der vorgenannten, bevorzugt Hydrogendifluorid und/oder Dihydrogentrifluorid.

Hierbei ist unter einem Polyfluorid ein Addukt von mehr als einem Äquivalent HF an eine Fluorid-Ionen enthaltende Verbindung zu verstehen.

Bei dem erfindungsgemäßen Verfahren kann weiter vorgesehen sein, dass die Herstellung des modifizierten Isocyanats, speziell die Umsetzung des monomeren Isocyanats in Gegenwart des Katalysators unter Bildung einer Reaktionsmischung (a), unter Anwesenheit eines Lösungsmittels durchgeführt wird.

Zur Durchführung des erfindungsgemäßen Verfahrens können prinzipiell alle bekannten Mono-, Di-, Tri- oder Poly-isocyanate als erfindungsgemäße, monomere Isocyanate des Standes der Technik einzeln oder in beliebigen Mischungen untereinander eingesetzt werden.

Beispielhaft seien genannt: Pentamethylendiisocyanat (PDI), Hexamethylendiisocyanat (HDI), 2-Methylpentan-1,5-diisocyanat (MPDI), 2,4,4-Trimethyl-1,6-hexandiisocyanat und 2,2,4-Trimethyl-1,6-hexandiisocyanat (TMDI), 4-Isocyanatomethyl-1,8-octandiisocyanat (Nonantriisocyanat, NTI), 3(4)-Isocyanatomethyl-1-methylcyclohexylisocyanat (IMCI), Isophorondiisocyanat (IPDI), 1,3- sowie 1,4-Bis(isocyanatomethyl)benzen (XDI), 1,3- sowie 1,4-Bis(isocyanatomethyl)cyclohexan (H6XDI), Norbornandiisocyanat (NBDI), 2,4- sowie 2,6-Toluylendiisocyanat (TDI), Bis(4-isocyanatophenyl)methan (4,4'MDI), 4-Isocyanatophenyl-2-isocyanatophenylmethan (2,4'MDI) sowie mehrkernige Produkte, die durch Formaldehyd-Anilin-Polykondensation und anschließende Überführung der resultierenden (Poly)amine in die entsprechenden (Poly)isocyanate zugänglich sind (Polymer-MDI).

Bevorzugt sind aromatische Diisocyanate, d.h. Diisocyanate bei denen beide NCO-Gruppen an ein sp2-hybridisiertes Kohlenstoffatom gebunden sind, oder aliphatische Diisocyanate, d.h. Diisocyanate bei denen beide NCO-Gruppen an ein sp3-hybridisiertes Kohlenstoffatom gebunden sind.

Es ist belanglos, nach welchen Verfahren die vorstehend genannten monomeren Isocyanate generiert werden, d.h. mit oder ohne Verwendung von Phosgen.

In einer Ausführungsform der Erfindung weist das monomere Isocyanat eine NCO-Funktionalität größer 1,0, bevorzugt 2,0, besonders bevorzugt zwischen 2,0 und 3,0 auf.

In einer Ausführungsform der Erfindung ist das monomere Isocyanat ein aliphatisches, monomeres Isocyanat oder aromatisches, monomeres Isocyanat, bevorzugt ein aliphatisches, monomeres Isocyanat.

In einer Ausführungsform der Erfindung ist das monomere Isocyanat ein aliphatisches, monomeres Isocyanat und das aliphatische, monomere Isocyanat ist eine oder mehrere Verbindungen und wird ausgewählt aus der Gruppe bestehend aus Pentamethylendiisocyanat (PDI), Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methyl-cyclohexylisocyanat (IMCI), Isophorondiisocyanat (IPDI), 1,3- sowie 1,4-Bis(isocyanatomethyl)benzen (XDI), 1,3- so-wie 1,4-Bis(isocyanatomethyl)cyclohexan (H6XDI).

Erfindungsgemäß erfolgt in Schritt a) die Umsetzung eines monomeren Isocyanats in Gegenwart eines Katalysator unter Bildung einer Reaktionsmischung (a).

Die Menge des im erfindungsgemäßen Verfahren einzusetzenden, spirozyklischen Ammoniumsalzes als Katalysators richtet sich in erster Linie nach dem verwendeten monomeren Isocyanat und der angestrebten Reaktionsgeschwindigkeit und liegt vorzugsweise zwischen ≥ 0,001 und ≤ 5 mol-%, bevorzugt zwischen ≥ 0,002 und ≤ 2 mol-%, bezogen auf die Summe der Stoffmengen des eingesetzten monomeren Isocyanates und des Katalysators.

Das spirozyklische Ammoniumsalz als Katalysator kann im erfindungsgemäßen Verfahren oder im erfindungsgemäßen Katalysator-Kit unverdünnt oder in Lösungsmitteln gelöst eingesetzt werden. Als Lösungsmittel kommen dabei alle Verbindungen in Frage, die nicht mit dem Katalysator reagieren und ihn in ausreichendem Maße zu lösen vermögen, z.B. ggf. halogenierte, aliphatische oder aromatische Kohlenwasserstoffe, Alkohole, Ketone, Ester sowie Ether. Bevorzugt werden Alkohole verwendet.

Das erfindungsgemäße Verfahren kann im Temperaturbereich von 0 °C bis + 250 °C, bevorzugt 20 °C bis 200 °C, besonders bevorzugt 40 °C bis 150°C erfolgen und bei beliebigen Umsetzungsgraden, bevorzugt nachdem 5 bis 80 %, besonders bevorzugt 10 bis 60 %, des eingesetzten Isocyanates umgesetzt wurden, unterbrochen werden.

In einer Ausführungsform des erfindungsgemäßen Verfahrens wird in Schritt b) die Umsetzung der Reaktionsmischung (a) bei Erreichen eines vorgebbaren Umsetzungsgrades, bezogen auf die Gesamtmenge an NCO-Gruppen des monomeren Isocyanats durch Zugabe einer Stopper-Komponente gestoppt, wobei die Stopper-Komponente einen pKs-Wert unterhalb 4,0 aufweist und verschieden von HF ist, unter Bildung einer Reaktionsmischung (b).

In einer bevorzugten Ausführungsform des erfindungsgemäßen Verfahrens wird in Schritt b) die Stopper-Komponente in einer äquimolaren oder unteräquimolaren, bevorzugt unteräquimolaren Menge, bezogen auf die molare Menge des spirozyklischen Ammoniumsalzes zugegeben. Hierbei weist die Stopper-Komponente bevorzugt einen pKs-Wert unterhalb 4,0 auf und ist von HF verschieden.

In einer Ausführungsform des erfindungsgemäßen Verfahrens wird die Stopper-Komponente in Schritt b) ausgewählt aus der Gruppe umfassend oder bestehend aus Alkan- sowie Arylsulfonsäuren wie z.B. Napthalen-mono- sowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure.

In einer Ausführungsform des erfindungsgemäßen Verfahrens wird die Umsetzung bei Erreichen eines Umsetzungsgrades des monomeren Isocyanats von 5 bis 80 Gew, bevorzugt 5 bis 60 Gew.-%, durch Zugabe der Stopper-Komponente beendet.

In einer Ausführungsform des erfindungsgemäßen Verfahrens werden in Schritt c) nicht umgesetztes, monomeres Isocyanat aus der Reaktionsmischung (b) nach Schritt b) abgetrennt. Hierfür eignen sich beliebige Verfahren des Standes der Technik wie beispielswiese (Dünnschicht)destillation oder Extraktion, wobei das abgetrennte monomere Isocyanat bevorzugt anschließend wiederverwendet wird (recycliert).

In einer Ausführungsform des erfindungsgemäßen Verfahrens wird in Schritt d) eine Stabilisator-Komponente nach Schritt c) zugegeben, wobei die in Schritt d) zugegebene Stabilisator-Komponente mit der in Schritt b) zugegebenen Stopper-Komponente in einer äquimolaren oder unteräquimolaren, bevorzugt unteräquimolaren Menge, bezogen auf die molare Menge des spirozyklischen Ammoniumsalzes zugegeben wird.

In einer Ausführungsform des erfindungsgemäßen Verfahrens ist die Stabilisator-Komponente identisch oder verschieden, bevorzugt identisch zur Stopper-Komponente.

In einer bevorzugten Ausführungsform des erfindungsgemäßen Verfahrens weist die Stabilisator-Komponente einen pKs-Wert unterhalb 4,0 auf und ist von HF verschieden.

In einer Ausführungsform des erfindungsgemäßen Verfahrens wird die Stabilisator-Komponente ausgewählt aus der Gruppe umfassend oder bestehend aus Alkan- sowie Arylsulfonsäuren wie z.B. Napthalen-mono- sowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure.

Ein weiterer Gegenstand der Erfindung ist ein Katalysator-Kit für die Isocyanatmodifizierung, umfassend zwei separate Komponenten umfassend das spirozyklische Ammoniumsalz und die Stopper-Komponente, wobei
i) das spirozyklische Ammoniumsalz mindestens ein Ladungs-tragendes Sickstoffatom beinhaltet, welches Teil von zwei voneinander verschiedenen Ringsystemen (I) und (II) ist,
   wobei die voneinander verschiedenen Ringsysteme (I) und (II) jeweils aus C2-C20 Alkylenketten bestehen,
   wobei die jeweiligen Alkylenketten optional mit Heteroatomen wie Sauerstoff, Stickstoff oder Schwefel in der Alkylenkette unterbrochen sein können,
   wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene, exozyklische Substituenten enthält,
   wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist;
ii) die Stopper-Komponente einen pKs-Wert unterhalb 4,0 aufweist und verschieden von HF ist.

In einer Ausführungsform der Erfindung wird die Stopper-Komponente ausgewählt aus der Gruppe umfassend oder bestehend aus Alkan- sowie Arylsulfonsäuren wie z.B. Napthalen-mono- sowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure. In einer Ausführungsform der Erfindung umfasst das Katalysator-Kit auch die oben beschriebene Stabilisator-Komponente, wobei die Summe der zugegebenen Stopper- und Stabilisator-Komponente äquimolar bezogen auf die molare Menge des spirozyklischen Ammoniumsalzes ist.

Ein weiterer Gegenstand der Erfindung ist die Verwendung des erfindungsgemäßen Katalysator-Kits in der Isocyanatmodifizierung zur Verhinderung von Trübungen im modifizierten Isocyanat.

Ebenfalls ist die Verwendung eines spirozyklischen Ammoniumsalzes zur Herstellung eines modifizierten Isocyanats, wobei das spirozyklische Ammoniumsalz mindestens ein Ladungs-tragendes Sickstoffatom beinhaltet, welches Teil von zwei voneinander verschiedenen Ringsystemen (I) und (II) ist, wobei die voneinander verschiedenen Ringsysteme (I) und (II) jeweils aus C2-C20 Alkylenketten bestehen, wobei die jeweiligen Alkylenketten optional mit Heteroatomen wie Sauerstoff, Stickstoff oder Schwefel in der Alkylenkette unterbrochen sein können, wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene, exozyklische Substituenten enthält, wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist, Gegenstand der vorliegenden Erfindung.

Mit dem erfindungsgemäßen Modifizierverfahren ist ganz allgemein eine breite Palette qualitativ hochwertiger und deshalb für den Polyurethansektor sehr wertvoller modifizierter Isocyanate zugänglich.

Ein weiterer Gegenstand der vorliegenden Erfindung ist ein modifiziertes Isocyanat, erhältlich oder hergestellt durch das erfindungsgemäße Verfahren.

Abhängig vom verwendeten Ausgangs(di)isocyanat und den Reaktionsbedingungen entstehen beim erfindungsgemäßen Verfahren Polyisocyanate vom sog. Isocyanat-Trimertyp (d.h. enthaltend Isocyanurat- und/oder Iminooxadiazindionstrukturen) mit geringem Anteil an Uretdiongruppen ("Isocyanat-Dimere"). Bei steigender Reaktionstemperatur steigt der Anteil letzterer in den Verfahrensprodukten in der Regel an.

Bevorzugt sind hoch-Iminooxadiazindiongruppen-haltige Polyisocyanate die erfindungsgemäß durch Polyfluoridkatalyse zugänglich sind. Hierbei ist der Begriff "hoch-Iminooxadiazindiongruppen-haltig" zu verstehen als mindestens 30 mol-%, bevorzugt >35 mol-% und besonders bevorzugt >40 mol-% bezogen auf die Summe an Isocyanurat- und Iminooxadiazindiongruppen. Die vorstehend genannten molaren Verhältnisse lassen sich beispielsweise NMR-spektroskopisch ermitteln (s. Beispielteil).

Die nach dem erfindungsgemäßen Verfahren erhältlichen Produkte bzw. Produktgemische stellen mithin vielseitig verwendbare Ausgangsmaterialien zur Herstellung von, ggf. geschäumte(n), Kunststoffe(n) sowie Lacken, Beschichtungsmitteln, Klebstoffen und Zuschlag-stoffen dar. Daher ist die Verwendung der erfindungsgemäßen modifizierten Isocyanate zur Herstellung von geschäumten oder ungeschäumten Kunststoffen sowie Lacken, Beschichtungsmitteln, Klebstoffen und Zuschlag-stoffen ein weiterer Gegenstand der vorliegenden Erfindung. Folglich sind Polyurethankörper, erhältlich oder hergestellt durch Umsetzung wenigstens eines monomeren Diisocyanats und/oder Polyisocyanats mit wenigstens einer Polyolkomponente in Gegenwart der erfindungsgemäßen Katalysatorkomponente ein weiterer Gegenstand der Erfindung. Für den Fall, dass es sich um geschäumte Polyurethankörper handelt, sind es bevorzugt PIR-Schäume.

Die erfindungsgemäßen Verfahrensprodukte können als solche oder in Verbindung mit anderen Isocyanatderivaten des Standes der Technik, wie z.B. Uretdion-, Biuret-, Allophanat-, Isocyanurat- und/oder Urethan-Gruppen enthaltenden Polyisocyanaten, deren freie NCO-Gruppen ggf. mit Blockierungsmitteln desaktiviert wurden, eingesetzt werden.

Weitere Gegenstände der vorliegenden Erfindung sind Ein- oder Zweikomponenten-Systeme, enthaltend eine Komponente A), umfassend mindestens ein erfindungsgemäßes modifiziertes Isocyanat, und eine Komponente B), umfassend mindestens eine NCO-reaktive Verbindung, sowie eine Beschichtung, erhältlich oder hergestellt durch, ggf. unter Wärmeeinwirkung und/oder in Anwesenheit eines Katalysators, Härten eines erfindungsgemäßen Ein- oder Zwei-Komponenten-Systems aber auch die mit mindestens einem erfindungsgemäßen, gegebenenfalls unter Wärmeeinwirkung ausgehärteten, Ein- oder Zweikomponenten-System, beschichteten Substrate.

Bereits aus der überraschenden Beobachtung, dass die erfindungsgemäßen modifizierten Isocyanate keine - ggf. verzögert einsetzende - Trübung aufweisen, wird deutlich, dass die erfindungsgemäßen Produkte vom Stand der Technik strukturell und in der Zusammensetzung verschieden sein müssen. Die erfindungsgemäßen modifizierten Isocyanate unterscheiden sich gegenüber den Systemen des Standes der Technik durch das Kation des spirozyklischen Ammoniumsalzes. Die Unterschiede finden sich in den gehärteten oder geschäumten Polyurethankörpern wieder, somit ist ein Verbundbauteil, umfassend einen Werkstoff, der mit einem erfindungsgemäßen Polyurethankörper oder einer erfindungsgemäßen Beschichtung zumindest anteilig verbunden ist, ebenfalls Gegenstand der Erfindung.

Vorliegend hat der Begriff "modifiziertes Isocyanat" die eingangs definierte Bedeutung und steht vorzugsweise für ein Polyisocyanat, welches im statistischen Mittel mindestens 1,5 NCO-Gruppen aufweist. Das erfindungsgemäße modifizierte Isocyanat ist gleichbedeutend mit einer modifizierten Isocyanatzusammensetzung, da z.B. die Kationen und Anionen nicht abtrennbar enthalten sind. Eine erste Ausführungsform der Erfindung betrifft ein Verfahren zur Herstellung eines modifizierten Isocyanats umfassend
a) der Umsetzung eines monomeren Isocyanats in Gegenwart eines Katalysator unter Bildung einer Reaktionsmischung (a),
wobei der Katalysator mindestens ein spirozyklisches Ammoniumsalz enthaltend mindestens ein spirozyklisches Ammoniumkation und mindestens ein Anion umfasst, wobei das spirozyklische Ammoniumkation mindestens ein Ladungs-tragendes Sickstoffatom beinhaltet, welches Teil von zwei voneinander verschiedenen Ringsystemen (I) und (II) ist, wobei die voneinander verschiedenen Ringsysteme (I) und (II) jeweils aus C2-C20 Alkylenketten bestehen, wobei die jeweiligen Alkylenketten optional mit Heteroatomen wie Sauerstoff, Stickstoff oder Schwefel in der Alkylenkette unterbrochen sein können, wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene exozyklische Substituenten enthält, wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist.

Eine zweite Ausführungsform der Erfindung betrifft ein Verfahren gemäß der ersten Ausführungsform, wobei das Ringsystem (I) aus 3 bis 5 Atomen, bevorzugt 4 bis 5 Atomen und besonders bevorzugt aus 5 Atomen aufgebaut ist, wobei das spirozyklische Ammoniumkation jeweils mitgezählt wird.

Eine dritte Ausführungsform der Erfindung betrifft ein Verfahren gemäß der ersten oder zweiten Ausführungsform, wobei das Ringsystem (II) aus 6 bis 8 Atomen, bevorzugt 6 bis 7 Atomen und besonders bevorzugt aus 6 Atomen aufgebaut ist, wobei das spirozyklische Ammoniumkation jeweils mitgezählt wird.

Eine vierte Ausführungsform der Erfindung betrifft ein Verfahren gemäß eine der ersten bis dritten Ausführungsform, wobei die jeweiligen Alkylenketten nur Kohlenstoff und Wasserstoff enthalten. Eine fünfte Ausführungsform der Erfindung betrifft ein Verfahren gemäß eine der ersten bis vierten Ausführungsform, wobei der mindestens eine von H verschiedene Substituent eine verzweigte oder unverzweigte Alkylgruppe, eine verzweigte oder unverzweigte Cycloalkylgruppe und/oder eine substituierte oder unsubstituierte Arylgruppe, bevorzugt eine verzweigte oder unverzweigte Alkylgruppe ist.

Eine sechste Ausführungsform der Erfindung betrifft ein Verfahren gemäß eine der ersten bis fünften Ausführungsform, wobei der mindestens eine von H verschiedene Substituent eine verzweigte oder unverzweigte Alkylgruppe ist.

Eine siebte Ausführungsform der Erfindung betrifft ein Verfahren gemäß der sechsten Ausführungsform, wobei die verzweigte oder unverzweigte Alkylgruppe 1 bis 20 C-Atome, bevorzugt 1 bis 10 C-Atome enthält.

Eine achte Ausführungsform der Erfindung betrifft ein Verfahren gemäß eine der ersten bis siebten Ausführungsform, wobei das Ringsystem (II) den mindestens einen, bevorzugt die mindestens zwei, besonders bevorzugt die zwei bis vier und ganz besonders bevorzugt die zwei oder drei von H verschiedenen, exozyklischen Substituenten enthält.

Eine neunte Ausführungsform der Erfindung betrifft ein Verfahren gemäß eine der ersten bis achten Ausführungsform, wobei das Ringsystem (II) aus 6 bis 8 Atomen, bevorzugt 6 bis 7 Atomen und besonders bevorzugt aus 6 Atomen aufgebaut ist und zwei bis vier, bevorzugt zwei oder drei von H verschiedenen, exozyklischen Substituenten mit jeweils einer verzweigten oder einer unverzweigten, bevorzugt einer unverzweigten Alkylgruppe sind, wobei die verzweigte oder unverzweigte Alkylgruppe jeweils 1 bis 10, bevorzugt 2 bis 6 C-Atome enthält.

Eine zehnte Ausführungsform der Erfindung betrifft ein Verfahren gemäß der neunten Ausführungsform, wobei die berechnete Molmasse einer verzweigten oder einer unverzweigten, bevorzugt einer unverzweigten Alkylgruppe größer ist, als die der mindestens einen weiteren verzweigten oder einer unverzweigten, bevorzugt einer unverzweigten weiteren Alkylgruppe.

Eine elfte Ausführungsform der Erfindung betrifft ein Verfahren gemäß eine der ersten bis zehnten Ausführungsform, wobei das Ringsystem (I) aus 3 bis 5 Atomen, bevorzugt 4 bis 5 Atomen und besonders bevorzugt aus 5 Atomen aufgebaut, keine von H verschiedenen, exozyklischen Substituenten enthält.

Eine zwölfte Ausführungsform der Erfindung betrifft ein Verfahren gemäß eine der ersten bis elften Ausführungsform, wobei das Anion ausgewählt wird aus der Gruppe bestehend aus Hydroxid, Alkanoat, Carboxylat, Heterocyclen mit mindestens einem negativ geladenen Stickstoffatom im Ring, Fluorid, Hydrogendifluorid, höhere Polyfluoride, Addukte von mehr als einem Äquivalent HF an Fluorid-Ionen enthaltende Verbindungen und beliebige Mischungen der vorgenannten, bevorzugt Hydrogendifluorid und/oder Dihydrogentrifluorid..

Eine dreizehnte Ausführungsform der Erfindung betrifft ein Verfahren gemäß eine der ersten bis zwölften Ausführungsform, wobei das monomere Isocyanat eine NCO-Funktionalität von >1,0, bevorzugt von 2,0, besonders bevorzugt von 2,0-3,0 aufweist.

Eine vierzehnte Ausführungsform der Erfindung betrifft ein Verfahren gemäß eine der ersten bis dreizehnten Ausführungsform, wobei das monomere Isocyanat ein aliphatisches, monomeres Isocyanat oder aromatisches, monomeres Isocyanat, bevorzugt ein aliphatisches, monomeres Isocyanat ist. Eine fünfzehnte Ausführungsform der Erfindung betrifft ein Verfahren gemäß eine der ersten bis vierzehnten Ausführungsform, wobei das monomere Isocyanat ein aliphatisches, monomeres Isocyanat ist und das aliphatische, monomere Isocyanat eine oder mehrere Verbindungen ist und ausgewählt wird aus der Gruppe bestehend aus Pentamethylendiisocyanat (PDI), Hexamethylendiisocyanat (HDI), 2-Methylpentan-1,5-diisocyanat, 2,4,4-Trimethyl-1,6-hexandiisocyanat, 2,2,4-Trimethyl-1,6-hexandiisocyanat, 4-Isocyanatomethyl-1,8-octandiisocyanat, 3(4)-Isocyanatomethyl-1-methyl-cyclohexylisocyanat (IMCI), Isophorondiisocyanat (IPDI), 1,3- sowie 1,4-Bis(isocyanatomethyl)benzen (XDI), 1,3- so-wie 1,4-Bis(isocyanatomethyl)cyclohexan (H6XDI).

Eine sechzehnte Ausführungsform der Erfindung betrifft ein Verfahren gemäß eine der ersten bis fünfzehnten Ausführungsform umfassend:
b) die Umsetzung der Reaktionsmischung (a) bei Erreichen eines vorgebbaren Umsetzungsgrades, bezogen auf die Gesamtmenge an NCO-Gruppen des monomeren Isocyanats durch Zugabe einer Stopper-Komponente, wobei die Stopper-Komponente einen pKₛ-Wert unterhalb 4,0 aufweist und verschieden von HF ist, gestoppt wird unter Bildung einer Reaktionsmischung (b).

Eine siebzehnte Ausführungsform der Erfindung betrifft ein Verfahren gemäß sechzehnten Ausführungsform, wobei die Stopper-Komponente in einer äquimolaren oder unteräquimolaren, bevorzugt unteräquimolaren Menge, bezogen auf die molare Menge des spirozyklischen Ammoniumsalzes zugegeben wird.

Eine achtzehnte Ausführungsform der Erfindung betrifft ein Verfahren gemäß der sechzehnten oder siebzehnten Ausführungsform, wobei die Stopper-Komponente einen pKₛ-Wert unterhalb 4,0 aufweist.

Eine neunzehnte Ausführungsform der Erfindung betrifft ein Verfahren gemäß einer der sechzehnten bis achtzehnten Ausführungsform, wobei die Stopper-Komponente ausgewählt ist aus der Gruppe umfassend oder bestehend aus Alkan- sowie Aryl-sulfonsäuren wie z.B. Napthalen-mono- sowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure.

Eine zwanzigste Ausführungsform der Erfindung betrifft ein Verfahren gemäß einer der sechzehnten bis neunzehnten Ausführungsform, wobei die Umsetzung bei Erreichen eines Umsetzungsgrades des monomeren Isocyanats von 5 bis 80 Gew.-%, bevo¬zugt 10 bis 60 Gew.-% durch Zugabe der Stopper-Komponente gestoppt wird.

Eine einundzwanzigste Ausführungsform der Erfindung betrifft ein Verfahren gemäß einer der sechzehnten bis zwanzigsten Ausführungsform umfassend:
c) Abtrennung nicht umgesetzten, monomeren Isocyanats aus der Reaktionsmischung (b) nach Schritt b)

Eine zweiundzwanzigste Ausführungsform der Erfindung betrifft ein Verfahren gemäß der einundzwanzigsten Ausführungsform umfassend:
d) Zugabe einer Stabilisator-Komponente nach Schritt c), wobei die in Schritt d) zugegebene Stabilisator-Komponente mit der in Schritt b) zugegebenen Stopper-Komponente in einer äquimolaren oder unteräquimolaren, bevorzugt unteräquimolaren Menge, bezogen auf die molare Menge des spirozyklischen Ammoniumsalzes zugegeben wird.

Eine dreiundzwanzigste Ausführungsform der Erfindung betrifft ein Verfahren gemäß der zweiundzwanzigsten Ausführungsform, wobei die Stabilisator-Komponente identisch oder verschieden, bevorzugt identisch zur Stopper-Komponente ist.

Eine vierundzwanzigste Ausführungsform der Erfindung betrifft ein Verfahren gemäß der zweiundzwanzigsten oder dreiundzwanzigsten Ausführungsform, wobei die Stabilisator-Komponente einen pKₛ-Wert unterhalb 4,0 aufweist.

Eine fünfundzwanzigste Ausführungsform der Erfindung betrifft ein Verfahren gemäß einer der zweiundzwanzigsten bis vierundzwanzigsten Ausführungsform, wobei die Stabilisator-Komponente ausgewählt ist aus der Gruppe umfassend oder bestehend aus Alkan- sowie Aryl-sulfonsäuren wie z.B. Napthalen-mono- sowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure.

Eine sechsundzwanzigste Ausführungsform der Erfindung betrifft ein Katalysator-Kit für die Isocyanatmodifizierung, umfassend zwei separate Komponenten umfassend das spirozyklische Ammoniumsalz und die Stopper-Komponente, wobei
i) das spirozyklische Ammoniumsalz mindestens ein Ladungs-tragendes Sickstoffatom beinhaltet, welches Teil von zwei voneinander verschiedenen Ringsystemen (I) und (II) ist,
   wobei die voneinander verschiedenen Ringsysteme (I) und (II) jeweils aus C2-C20 Alkylenketten bestehen,
   wobei die jeweiligen Alkylenketten optional mit Heteroatomen wie Sauerstoff, Stick-stoff oder Schwefel in der Alkylenkette unterbrochen sein können,
   wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene, exozyklische Substituenten enthält,
   wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist;
ii) die Stopper-Komponente einen pKs-Wert unterhalb 4,0 aufweist und verschieden von HF ist.

Eine siebenundzwanzigste Ausführungsform der Erfindung betrifft ein Katalysator-Kit gemäß der sechsundzwanzigsten Ausführungsform, wobei die Stopper-Komponente ausgewählt ist aus der Gruppe umfassend oder bestehend aus Alkan- sowie Arylsulfonsäuren wie z.B. Napthalen-monosowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure.

Eine achtundzwanzigste Ausführungsform der Erfindung betrifft die Verwendung des Katalysator-Kits nach Anspruch sechsundzwanzigsten oder siebenundzwanzigsten Ausführungsform in der Isocyanatmodifizierung zur Verhinderung von Trübungen im modifizierten Isocyanat.

Eine neunundzwanzigste Ausführungsform der Erfindung betrifft die Verwendung eines spirozyklischen Ammoniumsalzes zur Herstellung eines modifizierten Isocyanats, wobei das spirozyklische Ammoniumsalz mindestens ein Ladungs-tragendes Sickstoffatom beinhaltet, welches Teil von zwei voneinander verschiedenen Ringsystemen (I) und (II) ist, wobei die voneinander verschiedenen Ringsysteme (I) und (II) jeweils aus C2-C20 Alkylenketten bestehen, wobei die jeweiligen Alkylenketten optional mit Heteroatomen wie Sauerstoff, Stickstoff oder Schwefel in der Alkylenkette unterbrochen sein können, wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene, exozyklische Substituenten enthält, wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist.

Eine dreißigste Ausführungsform der Erfindung betrifft ein modifiziertes Isocyanat, erhältlich oder hergestellt, bevorzugt unmittelbar erhältlich, durch ein Verfahren nach einem der ersten bis fünfundzwanzigsten Ausführungsform.

Eine einunddreißigste Ausführungsform der Erfindung betrifft ein Ein-Komponenten-System, enthaltend ein modifiziertes Isocyanat nach der dreißigsten Ausführungsform, bei dem die NCO-Gruppen blockiert sind, oder Zwei-Komponenten-System, enthaltend eine Komponente 1), umfassend mindestens ein modifiziertes Isocyanat nach der dreißigsten Ausführungsform, und eine Komponente 2), umfassend mindestens eine gegenüber NCO-Gruppen reaktive Verbindung.

Eine zweiunddreißigste Ausführungsform der Erfindung betrifft eine Beschichtung, erhältlich oder hergestellt durch Aufbringen eines Ein- oder Zwei-Komponenten-Systems nach der einunddreißigsten Ausführungsform auf ein Substrat und Aushärten, gegebenenfalls unter Wärmeeinwirkung und/oder in Anwesenheit eines Katalysators.

Eine dreiunddreißigste Ausführungsform der Erfindung betrifft ein Verbundbauteil, umfassend einen Werkstoff, der zumindest anteilig mit einer Beschichtung nach der zweiunddreißigsten Ausführungsform verbunden ist.

### Experimentalteil

### Messmethoden

Die vorliegende Erfindung wird im Folgenden anhand von Beispielen und Vergleichsbeispielen näher erläutert, ohne sie jedoch auf diese einzuschränken.

### Beispiele:

Alle Prozentangaben sind, soweit nicht anders vermerkt, als Gewichtsprozent zu verstehen.

Die Ermittlung des NCO-Gehaltes erfolgte durch Titration gemäß DIN EN ISO 11909:2007-05.

Die Beurteilung der Löslichkeit/Trübung erfolgt qualitativ anhand visueller Begutachtung, wobei größere Partikel erkannt werden, sowie mit einem Gerät der Fa. Hach, wobei über 1,5 TE(F) liegende Werte als nicht akzeptabel gelten.

Alle Reaktionen wurden, wenn nicht anders angegeben, unter einer Stickstoffatmosphäre durchgeführt.

Die verwendeten Diisocyanate sind Produkte der Covestro Deutschland AG, D-51368 Leverkusen, alle anderen kommerziell zugänglichen Chemikalien wurden von der Fa. Sigma Aldrich Chemie GmbH, Eschenstrasse 5 in D-82024 Taufkirchen, bezogen.

Die UPAC-Namen der verwendeten Katalysatoren wurden mit dem Programm ChemDraw Professional der Fa. Perkin Elmer, Version 20.1.1.125 generiert und händisch in die deutsche Sprache übertragen.

### Beispiel 1 bis 15: Herstellung spirozyklischer Ammoniumsalze mit unterschiedlichen Kationen und Anionen (z. T. erfindungsgemäß)

### Schritt i): allgemeine Herstellvorschrift zur Herstellung spirozyklischer Ammoniumchloride am nicht erfindungsgemäßen Beispiel das 5-Azaspiro[4.5] dekan-5-iumchlorides (vgl. auch Tabelle 1, Eintrag 2)

In einem 2 l Vierhalskolben mit Rührer und Intensivkühler wurden 61,7 g (1,1 mol) KOH, 500 ml Wasser (entionisiert) und 139,7 g (1,1 mol) 1,4-Dichlorbutan gemeinsam vorgelegt und unter Rühren auf ca. 100-110°C Ölbadtemperatur erhitzt (schwacher Rückfluß).

Nach Erreichen der o.g. Innentemperatur wurden 85,2 g (1 mol) Piperidin so zügig zugegeben, dass nicht zu heftiger Rückfluss eintrat.

Bereits kurz nach Beginn der Piperidinzugabe setzte Feststoffabscheidung ein. Das Reaktionsgemisch war von Beginn an heterogen (anfangs flüssig-flüssig, dann dreiphasig flüssig-flüssig-fest, dann fest-flüssig), enthielt aber immer genügend flüssige Phase für eine effiziente Durchmischung des Großteils der Reaktionsmasse. Optional kann von Fall zu Fall mehr Wasser verwendet werden.

Nach vollständiger Piperidinzugabe wurde zwei Stunden bei 110 - 120°C Ölbadtemperatur nachgerührt. Der Rückfluss ließ in diesem Zeitraum merklich nach.

Anschließend wurden am Rotationsverdampfer bei sukzessive ansteigender Badtemperatur und sukzessiver, an die Destillatmenge angepasster, Absenkung des Druckes alle bis zum Ende bei 0,1 mbar, 150°C flüchtigen Bestandteile abgetrennt und der nahezu farblose, feste Rückstand in 2-Propanol aufgenommen, unter Rühren am Rückfluß gut homogenisiert, filtriert und der Niederschlag mit siedendem 2-Propanol so lange gewaschen, bis ausschließlich KCl (im Vakuum getrocknet: 73,1 g, 98% d. Th.) verblieb.

Die Lösung des spirozyklischen Ammoniumsalzes, 5-Azaspiro[4.5]dekan-5-niumchlorid, wurde am Rotationsverdampfer auf ca. 60% Feststoff eingeengt, wobei nach Abkühlung auf Zimmertemperatur bereits Kristallisation einsetzte, die im Kühlschrank weiter vervollständigt wurde.

Durch Filtration, weiteres Einengen der anfallenden Mutterlaugen und Verarbeitung wie vorstehend beschrieben, Trocknen der anfallenden, farblosen, gut kristallisierenden Feststoffe im Vakuum (3 h, 150°C, 0,1 mbar) wurden summarisch 149,3 g (85% d. Th.) analysenreines 5-Azaspiro[4.5]dekan-5-niumchlorid erhalten, welches für die weiteren Umsetzungen (Anionenaustausch) zum Einsatz kam.

Die anderen, z.T. erfindungsgemäßen, spirozyklischen Ammoniumsalze wurden in Analogie zu o.g. Herstellvorschrift gewonnen.

Die dafür nötigen, substituierten Piperidinderivate, so nicht kommerziell zugänglich, wurden durch Kernhydrierung der entsprechenden Pyridinderivate gewonnen, hier beispielhaft anhand der **Hydrierung des 4-tert.Butylpyridins zum 4-tert.Butylpiperidin (Isomerengemisch)** beschrieben:
In einem gerührten 31 Hochdruckreaktor (V4A-Stahl) wurde 1 kg (7,4 mol) 4-tert-Butylpyridin in 750ml Methylcyclohexanon vorgelegt und unter Rühren (800 U/min) gelöst und 90g des Katalysators Rh/C (Ladung 5%, Fa. Aldrich Kat.N 206164) zugegeben. Es wurde dreimal mit 5 bar Stickstoff inertisiert. Anschließend wurden 50 bar Wasserstoff aufgedrückt, langsam unter Rühren auf 160°C erwärmt, der Wasserstoffdruck auf 100 bar erhöht und so lange Hydriert, bis kein Wasserstoff mehr aufgenommen wurde. Anschließend wurde nach Abkühlen und Entspannen die erhaltene Reaktionsmischung vom Katalysator abfiltriert und am Rotationsverdampfer komplett vom Lösemittel befreit.

Es verblieben 914 g einer leicht gelblichen Flüssigkeit, die im Vakuum destilliert wurde: Ölbad 100-105°C, Kopf 67-69°C bei 3 mbar. Ausbeute: 870,4 g (83,% d.Th.). Die ¹H-NMR-Analyse bestätigte die Struktur des Produktes.

Die nicht kommerziell zugänglichen, mehrfach substituierten Pyridinderivate wurde in Anlehnung an RU 2334739 erhalten, wie hier beispielhaft anhand der **Synthese des 3,5-Diethyl-5-propylpyridins** beschrieben sei, welches nach Hydrierung wie vorstehend beschrieben und Umsetzung zum Spirozyklus gemäß der allgemeinen Herstellvorschrift **1a** die in Tabelle 1, Eintrag 12 gezeigten Spezies (als Stereoisomerengemisch) liefert.

Die Reaktion wurde in einem 4L 4-Hals-Kolben durchgeführt. 1600 ml Butanal wurde vorgelegt und unter Rühren auf 0°C abgekühlt. 400 ml 28%ige wäßrige Ammoniaklösung wurden unter Kühlung und kräftigem Rühren innerhalb von wenigen Minuten zugegeben. Anschließend wurde das Reaktionsgemisch in einen Scheidetrichter überführt und nach Phasentrennung die untere, wässrige Phase abgelassen und verworfen. Die obere, organische Phase wurde zurück in den Reaktionskolben überführt und eine Lösung von 54 g Praseodym(III)nitrat Hexahydrat in 608 ml DMF zugegeben. Das Reaktionsgemisch wurde 24 h bei Zimmertemperatur gerührt und anschließend mit 3 mal 300 ml Diethylether extrahiert. Die vereinigten etherischen Extrakte wurden mit MgSO₄ getrocknet und am Rotationsverdampfer eingeengt. Die verbliebene, viskose, gelb-orange Flüssigkeit wurde anschließend mit Hilfe eines Dünnschichtverdampfers bei 160°C Manteltemperatur und 0,15 mbar Druck destilliert. Das erhaltene gelbe Destillat (711 g, 46% d.Th.) 3,5-Diethyl-5-propylpyridin (Isomerengemisch) wurden anschließend ohne weitere Reinigung hydriert wie weiter oben beschrieben.

Um zu Derivaten zu gelangen, die im durch die Zyklisierungsreaktion neu gebildeten Ringsystem substituiert sind, bietet sich ein vierstufiger Weg ausgehend von Nitroalkanen und Maleinsäureestern an, der nachfolgend am Beispiel der Synthese des **2-Isopropyl-1,4-dichlorbutans** (IUPAC Name: 1-Chlor-3-(chlormethyl)-4-methylpentan), welches z.B. für die Herstellung der Kationen 9 und 10 in Tabelle 1 benötigt wird, beschrieben sei.

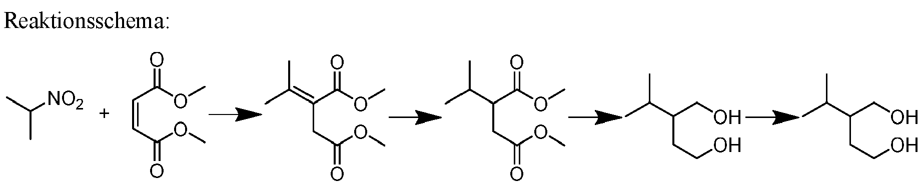

In einem 4l 4-Halskolben wurden 178 g 2-Nitropropan und 288 g Maleinsäuredimethylester in 2500 ml Acetonitril vorgelegt und bei Zimmertemperatur gerührt. 310 g 1,8-Diazabicyclo[5,4,0]undec-7-en (DBU) wurden bei Zimmertemperatur so zugegeben, dass die Innentemperatur 30°C nicht überstieg. Anschließend wurde bei Zimmertemperatur 7h weitergerührt. In die entstandene, gelbliche, transparente Lösung wurden 500g Kieselgel (Merck 0,04-0,063 mm) eingerührt und abfiltriert. Das Filtrat wurde einrotiert und der verbliebene gelbe Feststoff einer chromatographischen Reinigung unterworfen, Laufmittel: Toluol/Ethanol (2:1). Die das Produkt enthaltende Fraktion wurde am Rotationsverdampfer vom Lösemittel befreit. Es verblieben 367,7 g (98,8% d.Th.) Isopropylidenbemsteinsäuredimethylester als farblose Flüssigkeit (Struktur mittels ¹H- und ¹³C-NMR abgesichert). Letzterer wurde in einem 2l Hydrierreaktor aus V4A-Stahl mit Rührer in 700ml Ethylacetat gelöst vorgelegt und unter Rühren (800 U/min) mit 20 g Katalysator Pd/C (Ladung 10%) versetzt. Nach dreimaliger Inertisierung mit 5 bar Stickstoff und Druckprobe mit 30 bar Stickstoff bei ausgeschaltetem Rührer wurde der Rührer wieder eingesetzt und der Druck auf 5 bar Wasserstoff eingestellt. Anschließend wurde langsam auf 35°C erwärmt und bis zur Beendigung der Wasserstoffaufnahme hydriert. Nach dem Abkühlen wurde entspannt, die Reaktionslösung filtriert und am Rotationsverdampfer vom Lösemittel befreit. Es verblieben 318,5 g einer leicht gelblichen Flüssigkeit, die anschließend im Vakuum destilliert wurde. Ölbad 100-1 15°C° Kopf 55-67°C bei 0,05 -0,1 mbar. Ausbeute an Isopropylbernsteinsäuredimethylester (Struktur mittels ¹H-NMR abgesichert): 300,2 g (81,0% d.Th.).

In einem 4L 4-Hals-Kolben wurden 1200 ml wasserfreier Diethylether vorgelegt, 50 g LiAlH₄ unter Rühren portionsweise zugegeben und gelöst und anschließend eine Lösung von 99,2 g Isopropylbernsteinsäuredimethylester in 400 ml Diethylether langsam zugetropft. Das Reaktionsgemisch wurde 6h bei Zimmertemperatur gerührt und über Nacht stehen gelassen. 1000 ml Wasser wurden langsam und äußerst vorsichtig zugetropft und anschließend mit 20%iger-Salzsäure auf pH 2-3 eingestellt. Das Produkt wurde mit Ethylacetat (2 x 400ml) extrahiert, diese Lösung mit NaSO₄ getrocknet und am Rotationsverdampfer komplett vom Lösemittel befreit. Die verbliebene, farblose Flüssigkeit wurde im Vakuum destilliert. Ölbad 145-150 °C, Kopf:95-97°C bei 0,2mbar. Ausbeute: 65,5 g (94,0% d.Th.) an 2-Isopropyl-1,4-butandiol. Die 1H-NMR-Analyse bestätigte die Struktur. 205 g 2-Isopropyl-1,4-butandiol wurden in einem 4L 4-Hals-Kolben in 205g Pyridin gelöst und 729g Thionylchloirid langsam, unter Außenkühlung zugetropft, wobei die Temperatur der Reaktionsmischung unter 25°C blieb. Es bildete sich zunächst ein weißer Niederschlag der bei der weiteren Thionylchloridzugabe wieder in Lösung ging. Das Reaktionsgemisch wurde 2h bei 100°C (Bad) nachgerührt, dabei klarte die Lösung weiter auf und verfärbte sich zunehmend dunkel. Nach Abkühlung auf Zimmertemperatur wurde eine 1: 1 Mischung aus Eis und Wasser (2330g insgesamt) langsam und äußerst vorsichtig zugegeben und nach vollständigerr Zugabe noch 1h gerührt. Das Produkt wurde mit Diethylether (3 x 300ml) extrahiert und die vereingten Extrakte mit 50%-iger Schwefelsäure und dann mit Natriumhydrogencarbonat-Lösung gewaschen und neutralisiert, mit MgSO₄ getrocknet und am Rotationsverdampfer komplett vom Lösemittel befreit. Nach Vakuumdestillation (Ölbad 115°C, Kopf:44-45°C bei 0,02mbar) resultierten 220,8 g (84,2% d.Th.) lt. ¹H-NMR-Analyse reinen 2-Isopropyl-1,4-dichlorbutans (IUPAC Name: 1-Chlor-3-(chlormethyl)-4-methylpentan).

Die in Tabelle 1 aufgeführten Katalysatoren wurden entsprechend aus dem primär gebildeten Chlorid durch Anionenaustausch (optional gefolgt von HF-Zugabe für die Synthese der Di/Polyfluoride) entsprechend Beispiel 1 bis 4 auf Seite 10 der WO 2017/029266 A1 synthetisiert.

### Beispiel 16: Verfahren zur Modifizierung von HDI unter Verwendung des nicht-erfindungsgemäßen spirozyklischen Ammoniumsalzes 5-Azaspiro[4.5]dekan-5-ium hydrogendifluorid (Kation s. Tabelle 1, Zeile 2, Anion: [HF]₂⁻; Vergleich)

In einem doppelwandigen, durch einen externen Kreislauf temperierten Planschliffgefäß mit Rührer, an eine Inertgasanlage (Stickstoff/Vakuum) angeschlossenem Rückflusskühler und Thermometer wurden 1000 g HDI bei auf 60°C Innentemperatur vorgelegt und durch einstündiges Rühren im Vakuum (< 1 mbar) von gelösten Gasen befreit. Nach Belüften mit Stickstoff wurde tropfenweise eine 30%ige Lösung von 5-Azaspiro[4.5]dekan-5-ium hydrogendifluorid in 2-Propanol so dosiert, dass die Reaktion im Temperaturbereich zwischen ca. 59 und 62°C gefahren werden konnte. Nachdem ca. 1 mol NCO Gruppen umgesetzt waren, indiziert durch Erreichen eines NCO-Gehaltes um 45,8 %, wurde der Katalysator durch Zugabe einer zum Katalysator äquivalenten Menge an Dodecylbenzolsulfonsäure, 50%ig gelöst in 2-Ethylhexanol deaktiviert, weitere 30 min bei 60°C nachgerührt und anschließend aufgearbeitet.

Die Aufarbeitung erfolgte durch Vakuumdestillation in einem Dünnschichtverdampfer, Typ Kurzwegverdampfer (KWV), mit vorgeschaltetem Vorverdampfer (VV) (Destillationsdaten: Druck: 0,1 +/- 0,02 mbar, VV-Temperatur: 120 °C, HV-Temp.: 140 °C), wobei nicht umgesetztes Monomer als Destillat und das monomerenarme Polyisocyanatharz als Sumpfprodukt separiert wurden (Startdurchlauf). Das Polyisocyanatharz wurde separiert und das Destillat in einer zweiten Planschliff-Rührapparatur, die identisch zur ersten aufgebaut ist, gesammelt und mit frisch entgastem HDI auf die Ausgangsmenge (1000 g) aufgefüllt. Anschließend wurde erneut katalysiert und verfahren wie eingangs beschrieben. Diese Verfahrensweise wurde insgesamt sechsmal wiederholt. Nach mehreren Recyclierschritten war zu beobachten, dass die Katalysatormenge, die zum Erreichen des angestrebten Umsatzes nötig war, beim Startdurchlauf etwas höher war (0,28 g), als beim Folgeversuch (0,2 g), aber danach sukzessive anstieg (0,21; 0,25; 0,31; 0,45 g).

Weiterhin war, insbesondere bei den Produkten der "späteren" Recyclierschritte und oft erst nach mehrwöchiger Lagerung, insbesondere bei niedriger Temperatur und/oder nach Zugabe typischer Lacklösemittel wie Xylol oder Solventnaphtha, eine langsam einsetzende Trübung bei den Polyisocyanatharzen, mitunter begleitet von einem langsamen Anstieg des Restmonomerengehates, insbesondere bei der Lagerung bei höherer Temperatur, zu verzeichnen. Die nach Filtration erhaltenen Niederschläge erwiesen sich nach Ausweis kombinierter analytischer Methoden im Wesentlichen als ein Gemisch aus 5-Azaspiro[4.5]dekan-5-ium chlorid (Hauptkomponente) sowie 5-Azaspiro[4.5]dekan-5-ium bromid (Nebenkomponente, ca. 50% molar ggü. dem chlorid) neben geringen Mengen anderer Salze mit 5-Azaspiro[4.5]dekan-5-ium kation, insbesondere dem Dodecylbenzolsulfonat.

### Beispiel 17: Verfahren zur Modifizierung von HDI unter Verwendung des erfindungsgemäßen spirozyklischen Ammoniumsalzes 9-Ethyl-6-methyl-5-azaspiro[4.5]dekan-5-ium hydrogendifluorid (Kation s. Tabelle 1, Zeile 6, Anion: [HF]₂⁻;erfindungsgemäß)

Es wurde in völliger Analogie zur vorstehend beschriebenen Verfahrensweise vorgegangen, mit der einzigen Ausnahme, dass eine 30%ige Lösung des Katalysators 9-Ethyl-6-methyl-5-azaspiro[4.5]dekan-5-ium hydrogendifluorid in 2-Propanol zum Einsatz kam.

Ausfällungen in den Polyisocyanatharzen wurden auch bei langer Lagerung, auch bei niedriger Temperatur, optional in Gegenwart typischer Lacklösemittel nicht beobachtet, weshalb davon ausgegangen werden kann, dass die Löslichkeit der Halid-Salze des 9-Ethyl-6-methyl-5-azaspiro[4.5]dekan-5-ium kations in der Polyisocyanatmatrix höher als die des im Vergleichsbeispiel zum Einsatz gelangten 5-Azaspiro[4.5]dekan-5-ium kations sein muss.

Diese Annahme wurde durch die Untersuchung der Löslichkeit des 9-Ethyl-6-methyl-5-azaspiro[4.5]dekan-5-ium chlorides in HDI sowie IPDI (Tabelle 1, Zeile 6, erfindungsgemäß) im Vergleich mit der Löslichkeit von Chloriden nicht substituierter Spiroammoniumkationen (Tabelle 1, Zeilen 1 - 3, nicht erfindungsgemäß) gestützt. Daher wurde zur weiteren Untersuchung erfindungsgemäß geeigneter Katalysatoren die Löslichkeit der entsprechenden Chloride in HDI sowie IPDI untersucht um ihre potenzielle Eignung für den erfindungsgemäßen Einsatz zu untersuchen. Die Ergebnisse dieser Untersuchungen sind Tabelle 1 zu entnehmen.

| Zeile | Formel des Kations | Llkt. Spiro⁺Cl⁻in HDI [ppm] | Llkt. Spiro⁺Cl⁻in IPDI [ppm] |
|---|---|---|---|
| 1 Vergleich | 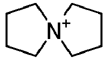 | 410 | 1140 |
| 2 Vergleich | 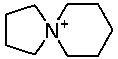 | 950 | 1915 |
| 3 Vergleich | 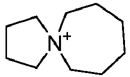 | 760 | 2095 |
| 4 | 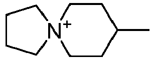 | 2087 | 2253 |
| 5 | 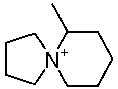 | 1548 | 817 |
| 6 | 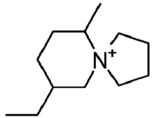 | 2250 | 3425 |
| 7 | 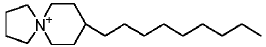 | 2225 | 3253 |
| 8 | 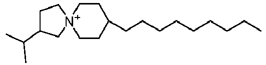 | 4125 | 6666 |
| 9 | 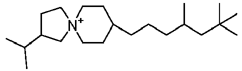 | 3020 | 5635 |
| 10 | 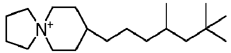 | 3400 | 2825 |
| 11 | 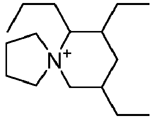 | 10660 | 20318 |
| 12 | 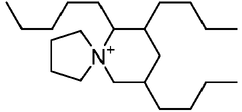 | 11585 | 18047 |
| 13 | 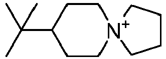 | 1046 | 1085 |
| 14 | 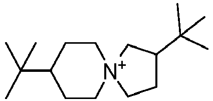 | 1860 | 2063 |
| 15 | 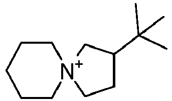 | 2010 | 3884 |

## Patentansprüche

1. Verfahren zur Herstellung eines modifizierten Isocyanats umfassend
a. der Umsetzung eines monomeren Isocyanats in Gegenwart eines Katalysator unter Bildung einer Reaktionsmischung (a),
wobei der Katalysator mindestens ein spirozyklisches Ammoniumsalz enthaltend mindestens ein spirozyklisches Ammoniumkation und mindestens ein Anion umfasst,
wobei das spirozyklische Ammoniumkation mindestens ein Ladungs-tragendes Sickstoffatom beinhaltet, welches Teil von zwei voneinander verschiedenen Ringsystemen (I) und (II) ist,
wobei die voneinander verschiedenen Ringsysteme (I) und (II) jeweils aus C2-C20 Alkylenketten bestehen,
wobei die jeweiligen Alkylenketten optional mit Heteroatomen wie Sauerstoff, Stickstoff oder Schwefel in der Alkylenkette unterbrochen sein können,
wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene exozyklische Substituenten enthält,
wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist.

2. Verfahren gemäß Anspruch 1, wobei das Ringsystem (II) den mindestens einen, bevorzugt die mindestens zwei, besonders bevorzugt die zwei bis vier und ganz besonders bevorzugt die zwei oder drei von H verschiedenen, exozyklischen Substituenten enthält.

3. Verfahren gemäß Anspruch 1 oder 2, wobei das Ringsystem (II) aus 6 bis 8 Atomen, bevorzugt 6 bis 7 Atomen und besonders bevorzugt aus 6 Atomen aufgebaut ist, wobei das spirozyklische Ammoniumkation jeweils mitgezählt wird und zwei bis vier, bevorzugt zwei oder drei von H verschiedenen, exozyklischen Substituenten mit jeweils einer verzweigten oder einer unverzweigten, bevorzugt einer unverzweigten Alkylgruppe sind, wobei die verzweigte oder unverzweigte Alkylgruppe jeweils 1 bis 10, bevorzugt 2 bis 6 C-Atome enthält.

4. Verfahren gemäß Anspruch 3, wobei die berechnete Molmasse einer verzweigten oder einer unverzweigten, bevorzugt einer unverzweigten Alkylgruppe größer ist, als die der mindestens einen weiteren verzweigten oder einer unverzweigten, bevorzugt einer unverzweigten weiteren Alkylgruppe.

5. Verfahren gemäß Anspruch 1 bis 4, wobei das Ringsystem (I) aus 3 bis 5 Atomen, bevorzugt 4 bis 5 Atomen und besonders bevorzugt aus 5 Atomen aufgebaut ist, wobei das spirozyklische Ammoniumkation jeweils mitgezählt wird und keine von H verschiedenen, exozyklischen Substituenten enthält.

6. Verfahren gemäß einem der Ansprüche 1 bis 5, wobei das Anion ausgewählt wird aus der Gruppe bestehend aus Hydroxid, Alkanoat, Carboxylat, Heterocyclen mit mindestens einem negativ geladenen Stickstoffatom im Ring, Fluorid, Hydrogendifluorid, höhere Polyfluoride, Addukte von mehr als einem Äquivalent HF an Fluorid-Ionen enthaltende Verbindungen und beliebige Mischungen der vorgenannten, bevorzugt Hydrogendifluorid und/oder Dihydrogentrifluorid.

7. Verfahren gemäß einem der Ansprüche 1 bis 6 umfassend:
b) die Umsetzung der Reaktionsmischung (a) bei Erreichen eines vorgebbaren Umsetzungsgrades, bezogen auf die Gesamtmenge an NCO-Gruppen des monomeren Isocyanats durch Zugabe einer Stopper-Komponente gestoppt wird, wobei die Stopper-Komponente einen pKₛ-Wert unterhalb 4,0 aufweist und verschieden von HF ist, unter Bildung einer Reaktionsmischung (b).

8. Verfahren gemäß Anspruch 7 umfassend:
c) Abtrennung nicht umgesetzten, monomeren Isocyanats aus der Reaktionsmischung (b) nach Schritt b)

9. Katalysator-Kit für die Isocyanatmodifizierung, umfassend zwei separate Komponenten umfassend das spirozyklische Ammoniumsalz und die Stopper-Komponente, wobei
i) das spirozyklische Ammoniumsalz mindestens ein Ladungs-tragendes Sickstoffatom beinhaltet, welches Teil von zwei voneinander verschiedenen Ringsystemen (I) und (II) ist, wobei die voneinander verschiedenen Ringsysteme (I) und (II) jeweils aus C2-C20 Alkylenketten bestehen,
wobei die jeweiligen Alkylenketten optional mit Heteroatomen wie Sauerstoff, Stickstoff oder Schwefel in der Alkylenkette unterbrochen sein können,
wobei mindestens eine Alkylenkette der zwei voneinander verschiedenen Ringsysteme (I) und (II) mindestens einen, bevorzugt mindestens zwei, besonders bevorzugt zwei bis vier und ganz besonders bevorzugt zwei oder drei von H verschiedene, exozyklische Substituenten enthält,
wobei der mindestens eine, bevorzugt die mindestens zwei, besonders bevorzugt die zwei bis vier und ganz besonders bevorzugt die zwei oder drei von H verschiedene Substituenten über eine Kohlenstoff-Kohlenstoff-Bindung, bevorzugt eine Kohlenstoff-Kohlenstoff-Einfachbindung an mindestens ein Kohlenstoffatom, bevorzugt mindestens zwei voneinander verschiedener Kohlenstoffatome, besonders bevorzugt zwei bis vier voneinander verschiedener Kohlenstoffatome und ganz besonders bevorzugt zwei oder drei voneinander verschiedener Kohlenstoffatome der C2-C20 Alkylenketten des Ringsystems (I) und/oder (II) gebunden ist;
ii) die Stopper-Komponente einen pKs-Wert unterhalb 4,0 aufweist und verschieden von HF ist.

10. Katalysator-Kit gemäß Anspruch 9, wobei die Stopper-Komponente ausgewählt ist aus der Gruppe umfassend oder bestehend aus Alkan- sowie Arylsulfonsäuren wie z.B. Napthalen-mono- sowie disulfonsäuren, Toluolsulfonsäure Dodecylbenzolsulfonsäure, Methansulfonsäure, Phosphorsäure und saure Ester der Phosphorsäure, wie beispielsweise Dibutylphosphat und/oder Monobutylphosphat sowie beliebige Mischungen der vorstehend genannten Verbindungen, bevorzugt aus aromatischen Sulfonsäuren und besonders bevorzugt aus Dodecylbenzolsulfonsäure und Toluolsulfonsäure.

11. Verwendung des Katalysator-Kits nach Anspruch 9 oder 10 in der Isocyanatmodifizierung zur Verhinderung von Trübungen im modifizierten Isocyanat.

12. Modifiziertes Isocyanat, erhältlich oder hergestellt, bevorzugt unmittelbar erhältlich, durch ein Verfahren nach einem der Ansprüche 1 bis 10.

13. Ein-Komponenten-System, enthaltend ein modifiziertes Isocyanat nach Anspruch 12, bei dem die NCO-Gruppen blockiert sind, oder Zwei-Komponenten-System, enthaltend eine Komponente 1), umfassend mindestens ein modifiziertes Isocyanat nach Anspruch 12, und eine Komponente 2), umfassend mindestens eine gegenüber NCO-Gruppen reaktive Verbindung.

14. Beschichtung, erhältlich oder hergestellt durch Aufbringen eines Ein- oder Zwei-Komponenten-Systems nach Anspruch 13 auf ein Substrat und Aushärten, gegebenenfalls unter Wärmeeinwirkung und/oder in Anwesenheit eines Katalysators.

15. Verbundbauteil, umfassend einen Werkstoff, der zumindest anteilig mit einer Beschichtung nach Anspruch 14 verbunden ist.
